# EUROPEAN PATENT SPECIFICATION

(11) **EP 3 136 870 B1**
(45) Date of publication and mention of the grant of the patent: **30.06.2021**
(21) Application number: 15785353.2
(22) Date of filing: 01.05.2015
(51) Int. Cl.: A22C 13/00

(54) **COMPOSITIONS FOR TRANSFERRING A COLORING TO A FOOD PRODUCT**
ZUSAMMENSETZUNGEN ZUR ÜBERTRAGUNG EINER FÄRBUNG AUF EIN LEBENSMITTELPRODUKT
COMPOSITIONS DE TRANSFERT DE COLORANT À UN PRODUIT ALIMENTAIRE

(30) Priority: 02.05.2014 US 201461987740 P
(43) Date of publication of application: 08.03.2017
(73) Proprietor: Kerry Ingredients & Flavours, Monterey, TN 38580 (US); Kalle GmbH, 65203 Wiesbaden (DE)
(72) Inventor: ZIEMES, Hans-Gerd, 47804 Krefeld (DE); VAN DER BLEEK, Mark Drewes, Cookeville, TN 38506 (US); KASTL, Erna, 65510 Hunstetten (DE)
(74) Representative: FRKelly
(86) International application number: PCT/US2015/028797
(87) International publication number: WO 2015/168554

(56) References cited:
- EP-A2- 0 473 091
- US-A1- 2001 055 640
- US-A1- 2005 175 746
- US-A1- 2006 127 538
- US-A1- 2007 190 210
- US-A1- 2008 122 133
- US-A1- 2008 226 853
- US-A1- 2009 274 799
- US-A1- 2011 076 367
- US-A1- 2012 128 836
- US-A1- 2012 128 836
- None

## Description

### TECHNICAL FIELD

The presently disclosed subject matter relates to compositions imparting color to foods.

### BACKGROUND

Today, processed meats, cheeses, and other foodstuffs are typically provided in casings and/or packaging materials. This packaging serves to form the product into a shape as well as serve as a vehicle to cook, ferment, chill, and/or store the product. Some examples of these finished products are boneless hams, wieners, sliced cheeses, and deli meats.

These packaging materials can be made up of a variety of materials or combinations of materials. Examples would be regenerated cellulose casings, fibrous casings, plastic casings and films, composite casings and films, and collagen gel casings and films. An added value to these packaging materials has been to use them to deliver "additives" (e.g., flavor and/or color) to the surface of a meat or foodstuff product. These "additives" are typically coated on the packaging, but can be incorporated into the packaging *per* se via adsorption or inclusion. Examples of this are caramel colorings, spices, and smoke (*see e.g.,* U.S. Patent Nos. 6,032,701 and 6,299,917, as well as European patent application EP 0 473 091 A2).

When a foodstuff comes in contact with the packaging, the "additive" is transferred to the foodstuff during processing. The result is a pleasing flavor and/or color on the surface of the finished food item. Examples of foodstuffs that are typically treated in this manner include Black Forest ham, roast beef, smoked ham, honey roasted turkey, lemon pepper coated deli chicken, and the like.

A particular advantage of caramel colored films and casings is that the product appears to be "roasted", "blackened", or "browned", even though the food product has not actually been "roasted", "blackened", or "browned". These caramel colored films and casings are therefore widely used in the industry to produce value-added meats, cheeses, and other foods.

A major disadvantage of caramel colored films and casings, however, is that they do not add a "roasted" or "browned" flavor to the finished food product. Rather, caramel color only serves to "color" the product. The result is a requirement to label "caramel coloring" on the finished food product, which can be undesirable. Many consumers demand a "clean" food label, meaning that a "caramel coloring" label is frequently undesirable. Other colorants, whether natural or artificial, can also be used, but many of these also require labeling on food products.

Caramel color is a product of the heat treatment of carbohydrates, typically sugars, usually in the presence of a catalyst. There are several types of caramel colors, including non-acid resistant and acid resistant types. The different types of caramel colors are chosen for their suitability for a particular end use. With soft drinks, acid-resistant type caramel colors are required. Malt beverages such as beer require non-acid resistant caramel. Non-acid-resistant caramel color particularly suitable for malt beverages and which is salt stable is produced using an aqueous ammonia or anhydrous ammonia catalyst. This is referred to as ammonia caramel color.

A potential health risk associated with the use of caramel color is the production of 4-methyl imidazole (hereafter 4-MEI) during processes wherein caramel color is used to treat foods or foods treated with caramel color are prepared. For example, 4-MEI can be produced when meats are cooked. A study of 4-MEI toxicity in mice suggested that certain types of lung cancers might be attributable to 4-MEI. Based at least in part on these discoveries, the United States Food and Drug Administration (FDA) has limited the content of 4-MEI in caramel color. Thus, for this additional reason, the use of caramel colors to treat foodstuffs is frequently undesirable.

### SUMMARY

This Summary lists the present invention together with several embodiments of the presently disclosed subject matter, and in many cases lists variations and permutations of these embodiments. This Summary is merely exemplary of the numerous and varied embodiments. Mention of one or more representative features of a given embodiment is likewise exemplary. Such an embodiment can typically exist with or without the feature(s) mentioned; likewise, those features can be applied to other embodiments of the presently disclosed subject matter, whether listed in this Summary or not. To avoid excessive repetition, this Summary does not list or suggest all possible combinations of such features. The present invention relates to food casings and/or packaging impregnated and/or coated on the inside with at least one transferrable coloring and/or flavoring agent. The at least one coloring and/or flavoring agent comprises a hydrolyzed vegetable protein (HVP), optionally an acid-hydrolyzed vegetable protein, a yeast extract, or a combination thereof. In some embodiments, the at least one coloring and/or flavoring agent comprises an HVP produced by hydrolyzing soy, corn, wheat, and/or sunflower biomass. In some embodiments, the soy, corn, wheat, and/or sunflower biomass is produced from non-GMO soy, non-GMO corn, non-GMO wheat, and/or non-GMO sunflower. In some embodiments, the HVP is produced from a vegetable protein source that is substantially non-allergenic in humans, optionally wherein the vegetable protein source is from corn, sunflower, or a combination thereof. In some embodiments, the at least one coloring and/or flavoring agent is combined with at least one oil, lecithin, or a combination thereof. In some embodiments, the coloring and/or flavoring agent also acts as a flavoring agent to impart a dark roast flavor to a food present within the food casing or packaging.

The food casings and/or packaging further comprise an antimicrobial additive that provides antimicrobial activity to the food casing or packaging or to a food product contained within the same. In some embodiments, the antimicrobial additive comprises a primary liquid smoke or a derivative thereof.

The antimicrobial additive is a derivative of a primary liquid comprising carbonyl of at least 10% weight per unit volume (w/v), titratable acidity in a concentration of 0 to about 6% weight per unit volume (w/v), and phenolics in a concentration of less than about 0.5% weight per unit volume (w/v); has a pH of greater than about 3.0, optionally greater than 4.5; and imparts no smoke flavor to a food product when the food product is treated with the derivative of liquid smoke. In some embodiments, the antimicrobial additive inhibits growth on the food product of a microorganism selected from the group consisting of *Streptococcus, Shigella, Hafnia, Enterobacter, Serratia, Staphylococcus, Pseudomonas, Citrobacter, Klebsiella, Escherichia coli, Listeria, Salmonella, Saccharomyces, and Aspergillus* when the food product is treated with the derivative of liquid smoke

The presently disclosed subject matter also provides ready to eat and/or ready to cook food preparations. In some embodiments, the ready to eat and/or ready to cook food preparations comprise poultry, pork, beef, fish, and/or cheese. In some embodiments, the food product is present within a food casing or a packaging of the presently disclosed subject matter.

The presently disclosed subject matter also provides methods for imparting a color to a food product. In some embodiments, the methods comprise maintaining the food product in the food casing or packaging impregnated and/or coated on the inside with at least one transferrable coloring and/or flavoring agent for a time and under conditions sufficient to impart a color to the food product, wherein the coloring and/or flavoring agent comprises a hydrolyzed vegetable protein (HVP), optionally an acid-hydrolyzed vegetable protein, a yeast extract, or a combination thereof. In some embodiments, the conditions sufficient to impart a color to the food product comprise cooking the food product in the food casing or packaging material.

### BRIEF DESCRIPTION OF THE FIGURE

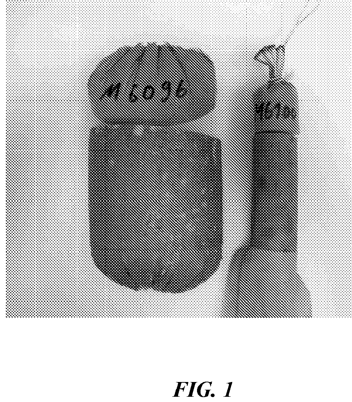

Figure 1 is a photograph of food products colored with a coloring and/or flavoring agent of the presently disclosed subject matter comprising HVP and a low flavor liquid smoke derivative. Two ham products were cooked within polymer composite impermeable casings that had been slug coated with the HVP/ liquid smoke derivative. The Figure shows that the majority of the coloring and/or flavoring agents present within the casings was transferred to the surface of the foodstuffs.

### DETAILED DESCRIPTION

Disclosed herein are casings and packaging materials designed to transfer a "roasted", "browned", and/or "blackened" color to a foodstuff to create a finished food product that is both pleasing in color and flavor. The product in some embodiments does not contain a colorant and therefore would not require a "colorant" label.

A challenge addressed by the presently disclosed subject matter is to define an ingredient that is not considered a colorant. Additionally, the ingredient must not add negative and/or signature flavors to a "roasted" product. For example, liquid smokes and derivatives thereof can add dark color to foodstuffs, but generally also add a signature smoke flavor that in many cases and for many foodstuffs is not desirable on an oven roasted product. Furthermore, the defined ingredient must be approved in a variety of foods. Even further is the necessity that the ingredient be compatible and functional with a food casing and/or packaging material, and must successfully transfer the desired coloring and/or flavoring to the finished product.

The presently disclosed subject matter thus provides a casing and/or packaging that contains a coloring and/or flavoring agent that transfers a dark roasted color to a foodstuff. In some embodiments, the coloring and/or flavoring agent comprises a hydrolyzed vegetable protein (HVP) and/or a Yeast Extract.

These ingredients are typically used to add "roasted" flavors to a wide variety of foods including soups, snacks, and meat seasonings. Currently, however, it has not been envisioned to coat casings and/or packaging materials with HVP or Yeast Extract for the purpose of transferring roasted color and/or flavor to the surface of finished food products.

An added benefit to the presently disclosed subject matter is the possibility of imparting an enhanced roasted flavor along with the color. Caramel color, on the other hand, typically adds either no flavor or a "bitter" flavor note to foods.

An additional benefit is that these dark roasted flavors are protein based. Surprisingly, this feature allows the flavor to "release" from the packaging material and adhere tightly to the protein present in the foodstuff. This is a benefit as it does not "wash off" or "purge off" of the food product during subsequent treatment or packaging.

Still another benefit of the presently disclosed subject matter is that these "dark roasted flavors" are surprisingly compatible with all functions of the casings and packaging materials in which the foodstuffs might be placed. Stuffing, cooking, and even peeling are fully functional when foods are prepared with the color agents described herein.

Additionally, the dark roasted flavors provided by the color agents of the presently disclosed subject matter are also surprisingly fully functional with a wide variety of packaging materials. Even impermeable packaging (such as but not limited to plastics) functions to transfer a roasted color on finished products using the compositions and methods of the presently disclosed subject matter.

### I. Definitions

While the following terms are believed to be well understood by one of ordinary skill in the art, the following definitions are set forth to facilitate explanation of the presently disclosed subject matter.

Unless defined otherwise, all technical and scientific terms used herein have the same meaning as commonly understood to one of ordinary skill in the art to which the presently disclosed subject matter belongs. Although any methods, devices, and materials similar or equivalent to those described herein can be used in the practice or testing of the presently disclosed subject matter, representative methods, devices, and materials are now described.

Following long-standing patent law convention, the articles "a", "an", and "the" refer to "one or more" when used in this application, including in the claims.

Unless otherwise indicated, all numbers expressing quantities of ingredients, reaction conditions, and so forth used in the specification and claims are to be understood as being modified in all instances by the term "about". Accordingly, unless indicated to the contrary, the numerical parameters set forth in this specification and attached claims are approximations that can vary depending upon the desired properties sought to be obtained by the presently disclosed subject matter.

As used herein, the term "about," when referring to a value or to an amount of mass, weight, time, volume, concentration or percentage is meant to encompass variations of in some embodiments ±20%, in some embodiments ±10%, in some embodiments ±5%, in some embodiments ±1%, in some embodiments ±0.5%, and in some embodiments ±0.1% from the specified amount, as such variations are appropriate to perform the presently disclosed methods.

All references cited in the instant disclosure, including but not limited to all patents, patent applications, and publications thereof, including all patents, patent applications, and publications thereof cited therein, are incorporated herein by reference in their entireties to the extent that they supplement, explain, provide a background for, or teach methodology, techniques, and/or compositions employed herein.

### II. Coloring and/or Flavoring Agents

In some embodiments, the presently disclosed subject matter provides a coloring and/or flavoring agent that is used to provide a desirable color to a food. In some embodiments, a coloring and/or flavoring agent is a hydrolyzed vegetable protein (HVP), optionally an acid-hydrolyzed vegetable protein, a yeast extract, or a combination thereof, optionally further comprising other additives that in some embodiments provide additional coloring and in some embodiments do not provide additional coloring.

The preparation of conventional HVP is generally carried out by acid hydrolysis of plants such as but not limited to soy, corn, wheat, and sunflowers with hydrochloric acid under refluxing conditions, specifically using 6M hydrochloric acid at 109°C at atmospheric pressure. In some embodiments, the plant biomass source (e.g., the soy, corn, wheat, sunflower, etc.) is substantially (e.g., greater than 90%, 92%, 94%, 96%, 97%, 98%, or 99%) or completely free of genetically-modified plant cells (referred to herein as "substantially non-GMO" and "non-GMO", respectively). Hydrolyzing vegetable proteins at these conditions results in the chlorination of glycerol, which is derived from the residual fatty substances present in the crude protein, to produce monochloropropanols (MCPs) and dichloropropanols (DCPs). As MCPs and DCPs exhibit questionable properties and characteristics, their presence is not desired in food products. DCPs are readily removed during the evaporation or concentration steps of standard processes. Unfortunately, MCPs are not removed, but are concentrated in the finished product, and therefore, additional processing steps must be taken to remove the MCPs from the finished product. The formation of MCP and DCP can be avoided by using sulfuric or phosphoric acid in place of hydrochloric acid. However, the HVPs produced by hydrolyzing with sulfuric or phosphoric acid are of an inferior quality in that they exhibit a bitter flavor. An approach to HVP production with sulfuric acid that avoids the undesirable taste is disclosed in U.S. Patent Application Publication No. 2005/0025877.

Autolyzed and/or hydrolyzed yeast extract (in some embodiments acid-hydrolyzed yeast extract) can also be used as a coloring and/or flavoring agent. Autolyzed yeast (in some embodiments, containing the cell walls) or autolyzed yeast extract are prepared by allowing yeast cells to die and degrade, which results in endogenous proteases present within the yeast to break down the yeast proteins into amino acids and peptides. Treating yeast with hypertonic sodium chloride solutions can also trigger autolysis of the yeast, which can then be heat-treated before any intact yeast are removed. Yeast extracts can also be prepared by hydrolysis using acids, enzymes, etc. or obtained from commercial sources.

In some embodiments a coloring and/or flavoring agent can be applied in the form of a solution (in some embodiments, an aqueous solution), an emulsion, or a dispersion. Solid coloring and/or flavoring agents are in some embodiments finely ground, the maximum particle size being in some embodiments less than 0.5 mm. In some embodiments, the mean particle size is less than 0.3 mm, in some embodiments less than 0.2 mm, in some embodiments 5-300 µm, and in some embodiments 10-150 µm. The particle size for a particular application can be selected so as to ensure sufficient adhesion to the inside of the food casing or other packaging.

The impregnation and/or coating on the inside of a casing and/or packaging in some embodiments comprises no binder. The inherent color, flavor, and/or aroma of the coloring and/or flavoring agent are therefore not diminished or adulterated. The properties typical of the respective coloring and/or flavoring agent thus become particularly noticeable.

In some embodiments, the coloring and/or flavoring agent can be combined with at least one component which improves the wettability of the inside of the casing and/or packaging. This component is in some embodiments an oil, optionally an animal- or vegetable-based oil (such as, but not limited to olive oil, rapeseed oil, etc.), or lecithin. In some embodiments, a wetting agent is selected to ensure substantially uniform and interruption-free application of the coloring and/or flavoring agent. The fraction of the component in the coating or impregnation liquid is in some embodiments about 3-45% by weight, and in some embodiments about 5-35% by weight.

The amount in which the coloring and/or flavoring agent is applied can depend on its type. The agent is applied in an amount of in some embodiments 3-18 g/m², and in some embodiments 5-15 g/m². The total weight of the impregnation or coating is, after drying, in some embodiments about 3-30 g/m², and in some embodiments about 5-20 g/m². In some embodiments, use of higher concentrations of the coloring and/or flavoring agents and/or use of a longer time in which the coloring and/or flavoring agent is in contact with a food product will result in even darker color being imparted to the food product.

### III. Substrates and Packaging

In some embodiments, the presently disclosed subject matter provides a packaging (including but not limited to casings, nets, flat films, shrink bags, and collagen gel products) that provides a coloring and/or flavoring agent (in some embodiments, a "dark roast flavor") comprising an HVP and/or a Yeast Extract. The coloring and/or flavoring agent contained on and/or in the packaging is designed to impart onto the surface of the food product a color that is typical of a roasted, browned, smoked, fried, or caramelized surface.

In some embodiments, the packaging is a casing or tubular film. In such embodiments, it is in some embodiments "slug" coated on the inside with a solution containing the coloring and/or flavoring agent in order to impart a dark roasted flavor to the food product. An exemplary method for slug coating is described in U.S. Patent No. 4,446,167.

In some embodiments, the solution contains additional ingredients to preserve the casing or packaging from microbes and oxidation. In addition, the solution can contain additional flavors to differentiate products. For example, in some embodiments a smoke flavor can be added to the product to impart a "smoke/roast" color and flavor. Other ingredients can include peeling and/or adhesion agents typically used in the casing and packaging industries.

If the packaging is flat, the coloring and/or flavoring agent can be coated on the packaging via a dip, spray, or other topical application. The product can also be applied as a powder to the surface of films.

In addition, the coloring and/or flavoring agent can in some embodiments be incorporated into the structure of a casing or packaging during production. An example of this would be inclusion into a collagen slurry prior to forming a film. Another example would be to incorporate the coloring and/or flavoring agent into a plastic packaging material during extrusion.

The packaging is then stuffed with a foodstuff or wrapped over a foodstuff. In some embodiments, the foodstuff is then cooked in the package, which in some embodiments results in a roasted color being transferred to the finished product. Once cooled, the package can be removed.

In some embodiments, the presently disclosed subject matter relates to packaging (including but not limited to casings, nets, flat film, shrink bags, and collagen gel products) that contain a coloring and/or flavoring agent (in some embodiments, a coloring and/or flavoring agent selected from the group consisting of an HVP and a yeast extract). The coloring and/or flavoring agent contained on and/or in the packaging is present in an amount that imparts on the surface of a finished product such as but not limited to a foodstuff a color that is typical of a roasted, browned, smoked, fried, or caramelized surface. In some embodiments, the color is imparted to the foodstuff prior to cooking, and in some embodiments the color is imparted to the foodstuff post-cooking such as but not limited to during post-cooking storage prior to consumption.

In some embodiments, the presently disclosed subject matter relates to a food casing that contains and/or is impregnated on the inside with one or more transferrable color agents, optionally also comprising one or more additional components such as but not limited to flavoring agents and antibacterial agents. The presently disclosed subject matter also relates in some embodiments to a process for producing such a food casing and the use thereof as an artificial casing for sausages, frankfurters, and the like.

Generally, food casings, especially sausage casings, which contain substances transferrable to the foodstuff, such as food colors, spices, aromas, flavorings, and the like, have been described. For instance, European Patent Application Publication No. EP 0 986 957 relates to a casing having a layer based on polyolefin, polyester, polyvinylidene chloride, polyvinyl chloride, or polystyrene and also a further layer that is provided for the food contact. This inner layer comprises a polysaccharide and/or a protein as binder and, mixed therewith, an aroma substance and/or flavoring, such as grilled chicken aroma, cinnamon, caramel, honey, citron oil, or orange oil. PCT International Patent Application Publication No. WO 1998/31731 describes a very similar food casing in which the inner layer in addition contains a crosslinker, for example a compound having two or more carbaldehyde groups.

European Patent Application Publication No. EP 0 992 194 describes a casing that comprises a layer made of synthetic polymers acting as water vapor barrier and/or oxygen barrier. This layer is joined to an inner layer made of a fibrous nonwoven or similar material that is impregnated with transferrable colorants and/or aroma substances, in particular with liquid smoke.

PCT International Patent Application Publication No. WO 2000/40093 discloses a food casing made of a synthetic thermoplastic material into which an additive is incorporated which serves for forming very small (0.002-1.0 µm) pores and/or channels, which results in the casing becoming permeable to smoke or similar substances. In addition, the thermoplastic material can also be mixed with colorants and/or aroma substances.

These and other examples of casings that can be employed to deliver color agents to foodstuffs are described in U.S. Patent Application Publication No. 2007/0202222.

Coating or impregnating the food casing on the inside can be performed by processes that are known to those skilled in the art. In a particularly simple process, the impregnation or coating is incorporated into the casing production process. In the case of the casing based on cellulose hydrate, a liquid bubble can be held in a continuously newly formed loop of the casing while the casing is moved on in the machine direction (known as "slug coating"). To improve the wetting of the inside of the casing, a surface-active agent can be added to the (generally aqueous) coating liquid. In addition, the viscosity of the coating liquid can be increased by adding lecithin or similar at least partially water-soluble substances (which in some embodiments are not binders). In this way, a thicker film can be generated on the inside that contains correspondingly more of the coloring and/or flavoring agent. The coating liquid can, in some embodiments, contain conventional plasticizers such as glycerol. The impregnated or coated casing can then pass through a dryer as is customary. If necessary, the casing is subsequently brought to the desired final moisture ("conditioned"), rolled up, and packaged.

Alternatively or in addition to this type of coating or impregnation, in some embodiments internal mandrel spraying can proceed during shirring of the casing. This is particularly useful when water-soluble coloring and/or flavoring agents are used.

In some embodiments, the presently disclosed subject matter relates to a food packaging that contains and/or is impregnated on the inside with one or more transferrable color agents, optionally also comprising one or more additional components such as but not limited to flavoring agents, antimicrobials (such as but not limited to antimycotic and antibacterial agents), and antioxidants. Exemplary, non-limiting packaging includes nets, flat films, bags and shrink bags, and collagen gel products. The modifications of casings described herein above can also be applied to these packagings, including but not limited to the provision of additional agents such as wetting agents, antimicrobial agents, etc.

### IV. Additives and Other Actives

In some embodiments, the casings and packagings of the presently disclosed subject matter contain and/or are impregnated with additional agents designed to impart to the casing and packagings desirable attributes. Exemplary, non-limiting additional agents include wetting agents, antimicrobial agents, and antioxidants.

In some embodiments, an antimicrobial agent that can be included within and/or embedded within a casing or packaging of the presently disclosed subject matter is a primary liquid smoke and/or a derivative thereof. Exemplary primary liquid smokes include the family of ZESTI-SMOKE™ products available from Kerry Ingredients & Flavours of Monterey, Tennessee, United States of America.

Exemplary liquid smokes and derivatives thereof are also disclosed in U.S. Patent No. 6,541,053 to Moeller. The liquid smokes disclosed in the '053 Patent include ZESTI-SMOKE™ Code 10 and the ZESTI-SMOKE™ Code V derivative thereof. The specifications of these liquid smokes are as follows:

| | Code 10 | Code V |
|---|---|---|
| Acidity (% w/v) | 10.5-11.0 | 6.8-7.8 |
| Staining Index | 69-80 | None |
| Carbonyl level (g/100mL) | 15-25 | 2.0-7.0 |
| Phenolic level (mg/mL) | 12-22 | 1.0-4.0 |
| Specific gravity (25°C) | 1.068-1.079 | 1.005-1.015 |
| Density (lbs/gal) | 8.90-8.99 | 8.37-8.46 |
| pH | 2-3 | 2.0-2.4 |
| Color | Amber | Amber |

ZESTI-SMOKE™ Code 10 and the ZESTI-SMOKE™ Code V derivative can be further modified as set forth in PCT International Patent Application Publication No. WO 2005/070181 to produce derivatives that have reduced phenol levels (in some embodiments, less than about 5 mg/ml) and/or increased pH (in some embodiments greater than about 3.0 and in some embodiments from 3.0 to 7.0 or higher). As also set forth in PCT International Patent Application Publication No. WO 2005/070181, in some embodiments a derivative of a primary liquid smoke that retains antimicrobial activity comprises acidity (quantified as acetic acid as set forth in PCT International Patent Application Publication No. WO 2005/070181) of 0-1.4% w/v, 1.5-2.9% w/v, 3.0-4.4% w/v, 4.5-5.9% w/v, or 6.0-7.4% w/v.

In some embodiments, different food products can be differentiated by adding one or more additional flavors, smoke flavors, oleoresins, spices, etc.

In some embodiments, the compositions and methods of the presently disclosed subject matter can aid in the function of a casing and/or packaging from a standpoint of peeling, adhesion, yield increase, etc.

### EXAMPLE

The following Example provides illustrative embodiments. Certain aspects of the following Example are disclosed in terms of techniques and procedures found or contemplated by the present inventors to work well in the practice of the embodiments. In light of the present disclosure and the general level of skill in the art, those of skill will appreciate that the following Example is intended to be exemplary only and that numerous changes, modifications, and alterations can be employed without departing from the scope of the presently claimed subject matter.

A solution of Dark Roast Color (HVP) was produced by blending in 50% HVP with 50% by wt. low flavor smoke extract (Commercially known as AM1 from Kerry Ingredients and Flavors). This solution was "slug" coated on the inside of a polymer composite impermeable casing. Percentage add-on by weight was 25%. The casing was then stuffed with a ham emulsion. The product was cooked in the casing, chilled, and then peeled.

The resulting end ham product is depicted in Figure 1. It had a pleasing roasted color and flavor. Surprisingly, it was observed that the casing transferred the majority of its color to the surface of the ham product.

It will be understood that various details of the presently disclosed subject matter may be changed without departing from the scope of the presently disclosed subject matter. Furthermore, the foregoing description is for the purpose of illustration only, and not for the purpose of limitation.

## Claims

1. A food casing or packaging impregnated and/or coated on the inside with at least one transferrable coloring and/or flavoring agent, wherein the coloring and/or flavoring agent comprises a hydrolyzed vegetable protein (HVP), optionally an acid-hydrolyzed vegetable protein, a yeast extract, or a combination thereof, wherein the food casing or packaging further comprises an antimicrobial additive comprising a derivative of liquid smoke; **characterized in that** the derivative:
(a) comprises carbonyl of at least 10% weight per unit volume (w/v), titratable acidity in a concentration of 0 to about 6% weight per unit volume (w/v), and phenolics in a concentration of less than about 0.5% weight per unit volume (w/v), and
(b) has a pH of greater than about 3.0,
such that the derivative of liquid smoke imparts no smoke flavor to a food product when the food product is treated with the derivative of liquid smoke.

2. The food casing or packaging of claim 1, wherein the coloring and/or flavoring agent comprises an HVP produced by hydrolyzing soy, corn, wheat, and/or sunflower biomass.

3. The food casing or packaging of claim 2, wherein the soy, corn, wheat, and/or sunflower biomass is produced from non-GMO soy, corn, wheat, and/or sunflower.

4. The food casing or packaging of claim 1, wherein the HVP is produced from a vegetable protein source that is substantially non-allergenic in humans, optionally wherein the vegetable protein source is from corn, sunflower, or a combination thereof.

5. The food casing or packaging of claim 1, wherein the coloring and/or flavoring agent is combined with at least one oil, lecithin, or a combination thereof.

6. The food casing or packaging of claim 1, wherein the derivative of liquid smoke inhibits growth on the food product of a microorganism selected from the group consisting of Streptococcus, Shigella, Hafnia, Enterobacter, Serratia, Staphylococcus, Pseudomonas, Citrobacter, Klebsiella, Escherichia coli, Listeria, Salmonella, Saccharomyces, and Aspergillus when the food product is treated with the derivative of liquid smoke.

## Patentansprüche

1. Lebensmittelhülle oder -verpackung, die an der Innenseite mit mindestens einem übertragbaren Färbe- und/oder Geschmacksmittel beschichtet ist, wobei das Färbe- und/oder Geschmacksmittel ein hydrolysiertes pflanzliches Protein (hydrolyzed vegetable protein - HVP), optional ein säurehydrolysiertes pflanzliches Protein, einen Hefeextrakt oder eine Kombination davon, umfasst, wobei die Lebensmittelhülle oder -verpackung ferner einen antimikrobiellen Zusatzstoff umfasst, der ein Derivat von Flüssigrauch umfasst, **dadurch gekennzeichnet, dass** das Derivat:
(a) Carbonyl mit mindestens 10 Gew-% pro Volumeneinheit (w/v), titrierbare Säure in einer Konzentration von 0 bis etwa 6 Gew-% pro Volumeneinheit (w/v) und Phenole in einer Konzentration von weniger als etwa 0,5 Gew-% pro Volumeneinheit (w/v) umfasst und
(b) einen pH größer als etwa 3,0 aufweist, sodass das Derivat von Flüssigrauch einem Lebensmittelprodukt keinen Rauchgeschmack verleiht, wenn das Lebensmittelprodukt mit dem Derivat von Flüssigrauch behandelt wird.

2. Lebensmittelhülle oder -verpackung nach Anspruch 1, wobei das Färbe- und/oder Geschmacksmittel ein HVP umfasst, das durch Hydrolysieren von Soja-, Mais-, Weizen- und/oder Sonnenblumenbiomasse erzeugt wird.

3. Lebensmittelhülle oder -verpackung nach Anspruch 2, wobei die Soja-, Mais-, Weizen- und/oder Sonnenblumenbiomasse aus GVO-freiem/-n Soja, Mais, Weizen und/oder Sonnenblumen erzeugt wird.

4. Lebensmittelhülle oder -verpackung nach Anspruch 1, wobei das HVP aus einer pflanzlichen Proteinquelle erzeugt wird, die im Wesentlichen in Menschen nicht allergen ist, wobei optional die pflanzliche Proteinquelle aus Mais, Sonnenblumen oder einer Kombination davon stammt.

5. Lebensmittelhülle oder -verpackung nach Anspruch 1, wobei das Färbe- und/oder Geschmacksmittel mit mindestens einem von Öl, Lecithin oder einer Kombination davon kombiniert wird.

6. Lebensmittelhülle oder -verpackung nach Anspruch 1, wobei das Derivat von Flüssigrauch das Wachstum auf dem Lebensmittelprodukt eines Mikroorganismus, ausgewählt aus der Gruppe bestehend aus Streptococcus, Shigella, Hafnia, Enterobacter, Serratia, Staphylococcus, Pseudomonas, Citrobacter, Klebsiella, Escherichia coli, Listeria, Salmonella, Saccharomyces und Aspergillus, hindert, wenn das Lebensmittelprodukt mit dem Derivat von Flüssigrauch behandelt wird.

## Revendications

1. Enveloppe ou emballage alimentaire imprégné et/ou enduit à l'intérieur d'au moins un agent colorant et/ou aromatisant transférable, dans lequel l'agent colorant et/ou aromatisant comprend une protéine végétale hydrolysée (PVH), éventuellement une protéine végétale hydrolysée par un acide, un extrait de levure, ou une combinaison de ceux-ci, dans lequel l'enveloppe ou l'emballage alimentaire comprend en outre un additif antimicrobien comprenant un dérivé de fumée liquide ; **caractérisé en ce que** le dérivé :
(a) comprend un carbonyle d'au moins 10 % en poids par unité de volume (p/v), une acidité titrable dans une concentration de 0 à environ 6 % en poids par unité de volume (p/v) et des phénols dans une concentration inférieure à environ 0,5 % en poids par unité de volume (p/v), et
(b) a un pH supérieur à environ 3, 0, de sorte que le dérivé de fumée liquide ne confère aucun arôme de fumée à un produit alimentaire lorsque le produit alimentaire est traité avec le dérivé de fumée liquide.

2. Enveloppe ou emballage alimentaire selon la revendication 1, dans lequel l'agent colorant et/ou aromatisant comprend une PVH produite par hydrolyse de la biomasse de soja, de maïs, de blé et/ou de tournesol.

3. Enveloppe ou emballage alimentaire selon la revendication 2, dans lequel la biomasse de soja, de maïs, de blé et/ou de tournesol est produite à partir de soja, de maïs, de blé et/ou de tournesol sans OGM.

4. Enveloppe ou emballage alimentaire selon la revendication 1, dans lequel la PVH est produite à partir d'une source de protéines végétales qui est sensiblement non allergène chez l'homme, éventuellement dans lequel la source de protéines végétales provient de maïs, de tournesol ou d'une combinaison de ceux-ci.

5. Enveloppe ou emballage alimentaire selon la revendication 1, dans lequel l'agent colorant et/ou aromatisant est combiné avec au moins une huile, de la lécithine ou une combinaison de celles-ci.

6. Enveloppe ou emballage alimentaire selon la revendication 1, dans lequel le dérivé de fumée liquide inhibe la croissance sur le produit alimentaire d'un micro-organisme choisi dans le groupe constitué de Streptococcus, Shigella, Hafnia, Enterobacter, Serratia, Staphylococcus, Pseudomonas, Citrobacter, Klebsiella, Escherichia coli, Listeria, Salmonella, Saccharomyces et Aspergillus lorsque le produit alimentaire est traité avec le dérivé de fumée liquide.
